# EUROPÄISCHE PATENTANMELDUNG

(11) **EP 1 515 069 A2**
(43) Veröffentlichungstag der Anmeldung: **16.03.2005**
(21) Anmeldenummer: 04019873.1
(22) Anmeldetag: 21.08.2004
(51) Int. Cl.: F16H 63/20

(54) **Hydraulische Ansteuerungseinrichtung für ein Getriebe**

(30) Priorität: 13.09.2003 DE 10342389
(71) Anmelder: ZF FRIEDRICHSHAFEN AG, 88046 Friedrichshafen (DE)
(72) Erfinder: Grosspietsch, Wolfgang, 97422 Schweinfurt (DE); Schneider, Hans-Jürgen, 97749 Stettbach (DE); Flückiger, Martin, 97421 Schweinfurt (DE); Ebert, Angelika, 97421 Schweinfurt (DE)

(57) **Zusammenfassung**

Eine hydraulische Ansteuereinrichtung für ein Getriebe, insbesondere ein Stirnradgetriebe, weist eine Haupteinheit (1) mit einer Druckerzeugungseinrichtung (3) und Schalteinrichtungen (4) sowie hydraulische Aktuatoreinheiten (2) auf. Die Aktuatoreinheiten (2) sind mit der Haupteinheit (1) zu einer in sich starren Baueinheit verbunden. Sie sind über in die Baueinheit eingebrachte starre Fluidkanäle (6) zumindest mit den Schalteinrichtungen (4) hydraulisch verbunden. Die Schalteinrichtungen (4) sind über Leitungen (8) mit der Druckerzeugungseinrichtung (3) hydraulisch verbunden und mit einem Vorratstank (11) hydraulisch verbindbar. Jeder Aktuatoreinheit (2) sind eine Schaltstange (15) und eine Schalteinrichtung (4) zugeordnet. Von jeder Aktuatoreinheit (2) ist die ihr zugeordnete Schaltstange (15) durch entsprechendes Ansteuern der ihr zugeordneten Schalteinrichtung (4) axial bidirektional verschiebbar. Das Verschieben der Schaltstangen (15) bewirkt ein Schalten des Getriebes. Die Schaltstangen (15) erstrecken sich axial von Schaltstangenanfängen (17) zu Schaltstangenenden (18), wobei zumindest die Schaltstangenanfänge (17) im wesentlichen auf gleicher axialer Höhe liegen. Die Haupteinheit (1) ist axial in der Nähe der Schaltstangenanfänge (17) angeordnet. Die Fluidkanäle (6, 7) zu den Aktuatoreinheiten (2) verlaufen axial ausschließlich in der Nähe der Schaltstangenanfänge (17).

## Beschreibung

Die vorliegende Erfindung betrifft eine hydraulische Ansteuereinrichtung für ein Getriebe, insbesondere ein Stirnradgetriebe, mit einer Haupteinheit und hydraulischen Aktuatoreinheiten,
- wobei in der Haupteinheit eine Druckerzeugungseinrichtung zur Druckbeaufschlagung von Hydraulikflüssigkeit und Schalteinrichtungen zum Durchschalten der Hydraulikflüssigkeit von der Druckerzeugungseinrichtung zu den Aktuatoreinheiten und von den Aktuatoreinheiten zu einem Vorratstank angeordnet sind,
- wobei die Aktuatoreinheiten mit der Haupteinheit zu einer in sich starren Baueinheit verbunden sind,
- wobei die Aktuatoreinheiten über in die Baueinheit eingebrachte starre Fluidkanäle zumindest mit den Schalteinrichtungen hydraulisch verbunden sind und die Schalteinrichtungen über Leitungen mit der Druckerzeugungseinrichtung hydraulisch verbunden und mit dem Vorratstank hydraulisch verbindbar sind,
- wobei jeder der Aktuatoreinheiten eine Schaltstange und eine der Schalteinrichtungen zugeordnet sind,
- wobei von jeder Aktuatoreinheit die ihr zugeordnete Schaltstange durch entsprechendes Ansteuern der ihr zugeordneten Schalteinrichtung axial bidirektional verschiebbar ist und das Verschieben der Schaltstangen ein Schalten des Getriebes bewirkt,
- wobei die Schaltstangen sich axial von Schaltstangenanfängen zu Schaltstangenenden erstrecken und zumindest die Schaltstangenanfänge im wesentlichen auf gleicher axialer Höhe liegen.

Bei Stirnradgetrieben erfolgt die Kraftübertragung beim Gangwechsel in der Regel durch axiales Verschieben von Schaltstangen, welche wiederum über Schaltgabeln auf die Synchronisierungen des Getriebes wirken. Bei automatisierten Stirnradgetrieben werden dabei entweder die Synchronisiereinrichtungen direkt hydraulisch angesteuert oder aber die Schaltstangen verschoben. Das Verschieben der Schaltstangen kann dabei alternativ mechanisch, elektromechanisch oder hydraulisch erfolgen. Die vorliegende Erfindung befasst sich mit einem Verschieben der Schaltstangen auf hydraulischem Weg.

Eine gattungsgemäße hydraulische Ansteuerungseinrichtung ist am Markt angekündigt worden. Bei dieser Ansteuereinrichtung sollen die Aktuatoreinheiten als Kombinationen von zwei einfach wirkenden Hydraulikzylindereinheiten mit je einem Kolben und einem Zylinderraum ausgebildet sein, wobei je eine der Hydraulikzylindereinheiten in der Nähe des Schaltstangenanfangs und des Schaltstangenendes der betreffenden Schaltstange angeordnet sein soll. Die Haupteinheit soll gemäß der Ankündigung seitlich neben den Schaltstangen angeordnet sein. Die Fluidkanäle sollen in der Getriebewand verlaufen, die Bestandteil der Haupteinheit sein soll.

Die oben stehend erwähnte Bauart ermöglicht die Integration der Zylinderräume direkt ins Getriebegehäuse und stellt somit eine kostengünstige Lösung dar. Diese Lösung ist aber nur dann einsetzbar, wenn die Haupteinheit seitlich neben den Schaltstangen anordenbar ist. Kann die Haupteinheit hingegen nicht neben den Schaltstangen angeordnet werden, so wären in der Haupteinheit relativ lange Fluidkanäle erforderlich oder es müssten druckfeste externe Leitungen vorhanden sein.

Die Aufgabe der vorliegenden Erfindung besteht darin, eine hydraulische Ansteuerungseinrichtung zu schaffen, bei der die Fluidkanäle kurz gehalten werden können und dennoch keine externen Leitungen vorhanden sein müssen, obwohl die Haupteinheit nicht seitlich neben den Schaltstangen angeordnet ist.

Die Aufgabe wird bei einer hydraulischen Ansteuerungseinrichtung der eingangs genannten Art dadurch gelöst, dass die Haupteinheit axial in der Nähe der Schaltstangenanfänge angeordnet ist und die Fluidkanäle zu den Aktuatoreinheiten axial ausschließlich in der Nähe der Schaltstangenanfänge verlaufen.

Um die Schaltstangen bidirektional verschieben zu können, obwohl die Fluidkanäle zu den Aktuatoreinheiten ausschließlich in der Nähe der Schaltstangenanfänge verlaufen, gibt es mehrere prinzipiell gleichwertige Lösungen.

So ist es beispielsweise möglich, dass mindestens eine der Aktuatoreinheiten als doppelt wirkende Hydraulikzylindereinheit mit einem Kolben und zwei Zylinderräumen ausgebildet ist, der Kolben zwischen den Zylinderräumen angeordnet ist und die Hydraulikzylindereinheit axial in der Nähe des Schaltstangenanfangs der betreffenden Schaltstange angeordnet ist.

Alternativ ist es auch möglich, dass mindestens eine der Aktuatoreinheiten als Kombination von zwei einfach wirkenden Hydraulikzylindereinheiten mit je einem Kolben und einem Zylinderraum ausgebildet ist, je eine der Hydraulikzylindereinheiten in der Nähe des Schaltstangenanfangs und des Schaltstangenendes der betreffenden Schaltstange angeordnet ist und der Zylinderraum der in der Nähe des Schaltstangenendes angeordneten Hydraulikzylindereinheit über eine in der betreffenden Schaltstange angeordnete Bohrung mit einem der Fluidkanäle verbunden ist.

Weiterhin ist es auch möglich, dass mindestens eine der Aktuatoreinheiten als einfach wirkende Hydraulikzylindereinheit mit einem Kolben und einem Zylinderraum ausgebildet ist, die zugeordnete Schaltstange mittels der Hydraulikzylindereinheit unidirektional verschiebbar ist und die Schaltstange in der Gegenrichtung mit einer Feder kraftbeaufschlagt ist.

Bei den beiden erstgenannten Lösungen können die Zylinderräume alternativ gleich große wirksame Flächen oder unterschiedlich große wirksame Flächen aufweisen. Bei gleich großen wirksamen Flächen müssen zwangsweise beide Zylinderräume von der zugeordneten Schalteinrichtung angesteuert werden können. Sind die wirksamen Flächen hingegen unterschiedlich groß, ist es möglich, dass die kleinere der beiden Flächen permanent mit Druck beaufschlagt wird. Nur der andere Zylinderraum muss von der betreffenden Schalteinrichtung angesteuert werden können.

Wenn die wirksame Fläche des einen Zylinderraums doppelt so groß wie die wirksame Fläche des anderen Zylinderraums ist, ergibt sich dabei unabhängig von der Verschieberichtung die gleiche Schubkraft.

Bezüglich des Zusammenwirkens von Schaltstange und Kolben gibt es ebenfalls mehrere Möglichkeiten.

So ist es beispielsweise möglich, dass die Schaltstange mindestens einer der Aktuatoreinheiten mit mindestens einem der Kolben der Hydraulikzylindereinheiten der ihr zu geordneten Aktuatoreinheit identisch ist. Alternativ ist es möglich, dass die Schaltstange zwar mit dem Kolben nicht identisch ist, aber mit dem Kolben unmittelbar verbunden ist. Weiterhin ist es möglich, dass der Kolben einen von außerhalb der Hydraulikzylindereinheit zugänglichen Kolbenansatz aufweist und die Schaltstange mit dem Kolbenansatz verbunden ist. Die Verbindung zwischen Schaltstange und Kolbenansatz kann dabei beliebiger Natur sein. Insbesondere kann sie lösbar oder unlösbar sein. Sie kann beispielsweise als Schnapp-, Rast-, Schraub-, Keilverbindung oder auch auf andere Weise ausgebildet sein.

Prinzipiell ist es möglich, jede Aktuatoreinheit unabhängig von den anderen Aktuatoreinheiten auszugestalten. In aller Regel sind die Aktuatoreinheiten aber untereinander gleich ausgebildet.

Es ist möglich, dass mindestens eine der Aktuatoreinheiten einzeln mit der Haupteinheit verbunden ist. Vorzugsweise aber sind mehrere der Aktuatoreinheiten, insbesondere alle Aktuatoreinheiten in einer gemeinsamen Aktuatoreinheitsbaugruppe angeordnet, welche mit der Haupteinheit verbunden ist. Es ist sogar möglich, dass mindestens eine der Aktuatoreinheiten in die Haupteinheit integriert ist. Es können sogar alle Aktuatoreinheiten in die Haupteinheit integriert sein.

Die Haupteinheit ist gegenüber den Schaltstangenanfängen radial oder axial versetzt angeordnet. Gegebenenfalls kann auch sowohl ein radialer als auch ein axialer Versatz vorhanden sein.

Weitere Vorteile und Einzelheiten ergeben sich aus der nachfolgenden Beschreibung von Ausführungsbeispielen in Verbindung mit den Zeichnungen. Dabei zeigen in Prinzipdarstellung
- Figur 1: schematisch ein Schaltbild einer hydraulischen Ansteuereinrichtung,
- Figur 2: eine erste Ausführungsform einer hydraulischen Ansteuereinrichtung in perspektivischer Darstellung,
- Figur 3: die hydraulische Ansteuereinrichtung von Figur 2 im Schnitt,
- Figur 4: einen Schnitt durch eine Aktuatoreinheit der hydraulischen Ansteuereinrichtung der Figuren 2 und 3,
- Figuren 5 - 8: schematische Darstellungen von hydraulischen Ansteuereinrichtungen,
- Figur 9: eine zweite Ausführungsform einer hydraulischen Ansteuereinrichtung in perspektivischer Darstellung,
- Figur 10: die hydraulische Ansteuereinrichtung von Figur 9 im Schnitt und
- Figur 11: einen Schnitt durch eine Aktuatoreinheit der hydraulischen Ansteuereinrichtung der Figuren 9 und 10.

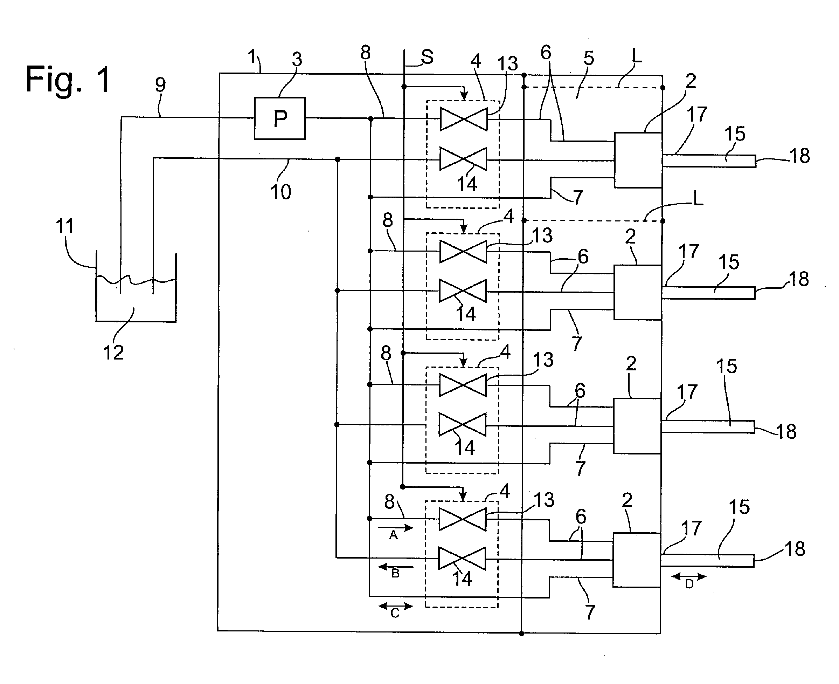

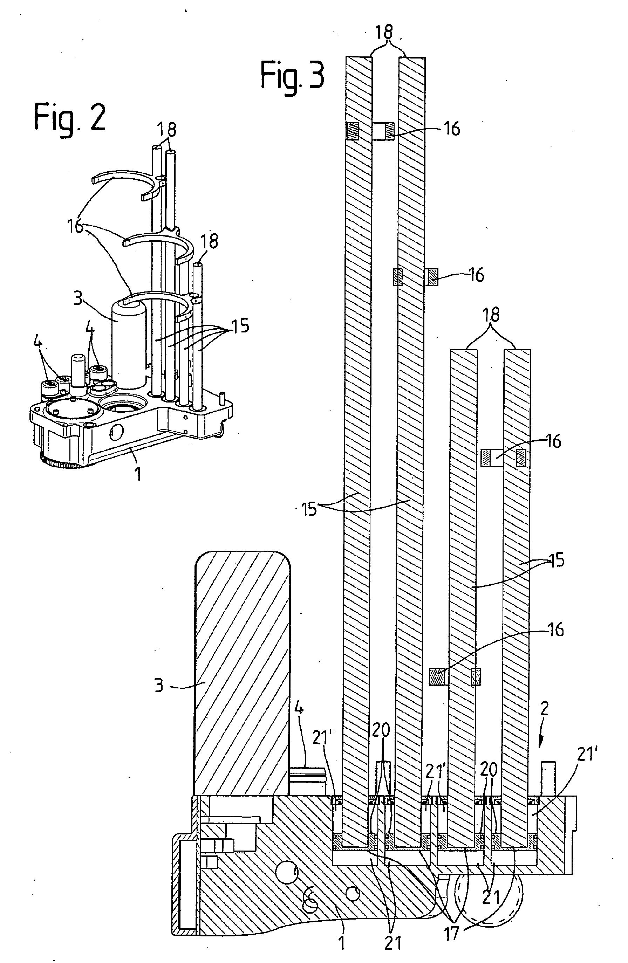

Gemäß Figur 1 - siehe ergänzend auch die Figuren 2 und 3 - weist eine hydraulische Ansteuereinrichtung für ein Getriebe eine Haupteinheit 1 und hydraulische Aktuatoreinheiten 2 auf. In der Haupteinheit 1 sind dabei eine Druckerzeugungseinrichtung 3 und Schalteinrichtungen 4 angeordnet.

Gemäß Figur 1 sind die Aktuatoreinheiten 2 in einer gemeinsamen Aktuatoreinheitsbaugruppe 5 angeordnet. Die Aktuatoreinheitsbaugruppe 5 ist mit der Haupteinheit 1 zu einer in sich starren Baueinheit verbunden.

Alternativ könnten, wie in Figur 1 für eine der Aktuatoreinheiten 2 durch gestrichelte Linien L angedeutet, die Aktuatoreinheiten 2 auch einzeln mit der Haupteinheit 1 verbunden sein. Auch in diesem Fall entstünde eine starre Baueinheit.

Es ist sogar möglich, wie aus den Figuren 2 und 3 ersichtlich ist, dass die Aktuatoreinheiten 2 in die Haupteinheit 1 integriert sind. In diesem Fall ergibt sich die Ausbildung als starre Baueinheit ganz von selbst durch die Integration der Aktuatoreinheiten 2 in die Haupteinheit 1.

Die Aktuatoreinheiten 2 sind über Fluidkanäle 6 mit den Schalteinrichtungen 4 hydraulisch verbunden. Die Aktuatoreinheiten 2 können ferner, wie in Figur 1 gestrichelt angedeutet ist, über Fluidkanäle 7 auch direkt mit der Druckerzeugungseinrichtung 3 hydraulisch verbunden sein. Dies hängt von der konkreten Ausgestaltung der Aktuatoreinheiten 2 ab.

Die Fluidkanäle 6, 7 sind ersichtlich in der Baueinheit angeordnet. Sie können daher als starre, in die Baueinheit eingebrachte Fluidkanäle 6, 7 ausgebildet sein. Sie können insbesondere einfache Bohrungen 6, 7 sein.

Die Schalteinrichtungen 4 sind über Leitungen 8 mit der Druckerzeugungseinrichtung 3 hydraulisch verbunden. Diese Leitungen 8 sind, da sie vollständig in der Baueinheit angeordnet sind, in der Regel ebenfalls als starre Fluidkanäle 8 ausgebildet. Auch sie können als Bohrungen 8 ausgebildet sein.

Ferner sind die Druckerzeugungseinrichtungen 3 und die Schalteinrichtungen 4 über Leitungen 9, 10 mit einem Vorratstank 11 hydraulisch verbunden, in dem sich eine Hydraulikflüssigkeit 12 befindet. Die im Vorratstank 11 befindliche Hydraulikflüssigkeit 12 steht dabei nicht unter Druck. Die Verbindungen zum Vorratstank 11 sind mechanisch lösbar.

Die Leitungen 9, 10 zum Vorratstank 11 verlaufen teilweise außerhalb der in sich starren Baueinheit. Sie können daher alternativ als starre Leitungen 9, 10 oder als flexible Schläuche 9, 10 ausgebildet sein.

Die Druckerzeugungseinrichtung 3 saugt Hydraulikflüssigkeit 12 aus dem Vorratstank 11 an, beaufschlagt sie mit Druck und leitet die Hydraulikflüssigkeit 1 2 an Schaltventile 13 der Schalteinrichtungen 4 weiter. Die Schalteinrichtungen 4 schalten - je nach Zuführung externer Steuersignale S - die Schaltventile 1 3 und Schaltventile 14 durch. Dadurch fließt die Hydraulikflüssigkeit 12 von der Druckerzeugungseinrichtung 3 zu den Aktuatoreinheiten 2 und von den Aktuatoreinheiten 2 zum Vorratstank 11, gegebenenfalls auch von den Aktuatoreinheiten 2 zur Druckerzeugungseinrichtung 3. Dies ist in Figur 1 für eine der Aktuatoreinheiten 2 durch Pfeile A bis C angedeutet.

Die Aktuatoreinheiten 2 sind als doppelt wirkende Aktuatoreinheiten 2 ausgebildet. Den Aktuatoreinheiten 2 zugeordnete Schaltstangen 15 werden daher, je nach Ansteuerung der zugeordneten Schalteinrichtung 4, axial vor oder zurück verschoben. Die Schaltstangen 15 sind also durch entsprechendes Ansteuern der Schalteinrichtungen 4 bidirektional verschiebbar. Dies ist in Figur 1 für eine der Aktuatoreinheiten 2 durch einen Doppelpfeil D angedeutet. Die Verschiebebewegungen können dabei, falls dies aus Steuerungs- und/oder Sicherheitsgründen gewünscht wird, wegsensiert oder weggeregelt erfolgen.

An den Schaltstangen 15 sind Schaltgabeln 16 angeordnet. Die Schaltgabeln 16 wirken auf nicht dargestellte Synchronisierungen eines Stirnradgetriebes. Die hydraulische Ansteuereinrichtung dient also dem Schalten des nicht dargestellten Stirnradgetriebes. Das Verschieben der Schaltstangen 15 bewirkt dabei das Schalten des Getriebes.

Gemäß den Figuren 2 und 3 erstrecken sich die Schaltstangen 15 axial von Schaltstangenanfängen 17 zu Schaltstangenenden 18. Zumindest die Schaltstangenanfänge 17 liegen dabei im Wesentlichen auf gleicher axialer Höhe. Die Haupteinheit 1 ist ersichtlich axial in der Nähe der Schaltstangenanfänge 17 angeordnet. Sie ist dabei gemäß Figur 1 gegenüber den Schaltstangenanfängen 17 axial versetzt angeordnet. Alternativ könnte sie aber auch, wie aus den Figuren 2 und 3 ersichtlich ist, gegenüber den Schaltstangenanfängen 17 radial versetzt angeordnet sein.

Die Aktuatoreinheiten 2 können - siehe insbesondere Figuren 3 bis 5 - als doppelt wirkende Hydraulikzylindereinheiten 19 ausgebildet sein. Sie weisen in diesem Fall einen Kolben 20 und zwei Zylinderräume 21, 21' auf. Der Kolben 20 ist dabei zwischen den Zylinderräumen 21, 21' angeordnet.

Auch die Aktuatoreinheiten 2 sind - siehe wieder Figuren 3 bis 5 - axial in der Nähe der Schaltstangenanfänge 17 angeordnet. Es ist daher möglich, dass die Fluidkanäle 6, 7 zu den Aktuatoreinheiten 2 axial ausschließlich in der Nähe der Schaltstangenanfänge 17 verlaufen. Ein Führen der Fluidkanäle 6, 7 in axialer Richtung, also in Richtung auf die Schaltstangenenden 18 zu, ist nicht erforderlich.

Gemäß den Figuren 3 bis 5 weisen die Zylinderräume 21, 21' wirksame Flächen F1, F2 auf, die unterschiedlich groß sind. Es ist daher möglich, wie in Figur 1 gestrichelt dargestellt, die kleinere der Flächen F1, F2, hier also die Fläche F1, permanent mit druckbeaufschlagter Hydraulikflüssigkeit 12 zu beaufschlagen. Nur die andere der Flächen F1, F2, hier also die Fläche F2, muss über die korrespondierende Schalteinrichtung 4 angesteuert werden können. Insbesondere ist es möglich, dass die wirksame Fläche F1 halb so groß wie die wirksame Fläche F2 ist. In diesem Fall ergibt sich in beide Verschieberichtungen der korrespondierenden Schaltstange 1 5 eine gleich große Betätigungskraft. Es sind aber - je nach Anwendungsfall - auch andere Flächenverhältnisse möglich.

Gemäß den Figuren 3 bis 5 sind ferner die Kolben 20 und die Schaltstangen 1 5 voneinander verschiedene Teile. Die Schaltstangen 15 sind aber mit den Kolben 20 der ihr zugeordneten Hydraulikzylindereinheiten 19 unmittelbar verbunden. Beispielsweise können die Schaltstangen 15 in die Kolben 20 eingepresst sein.

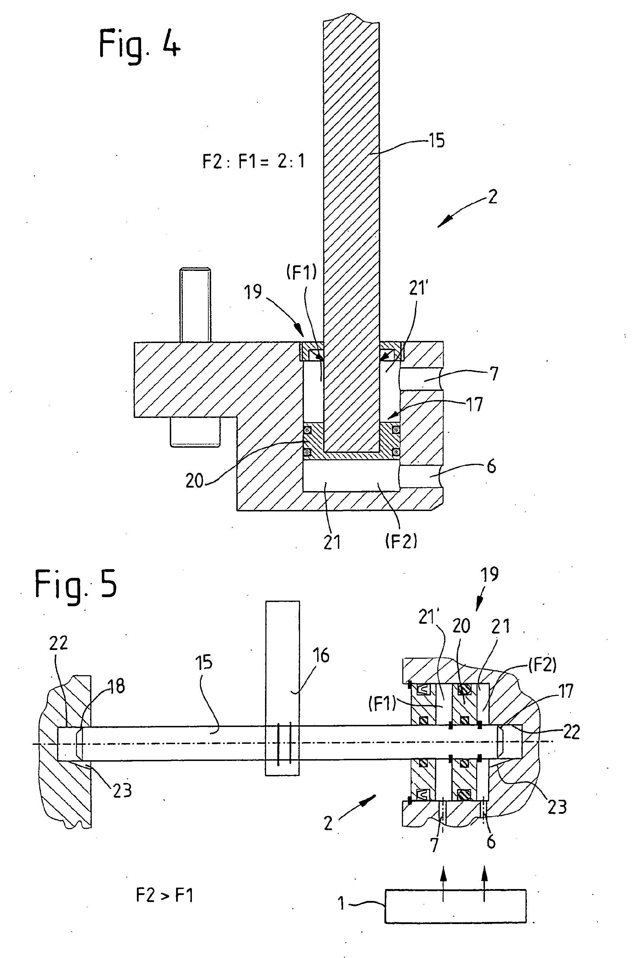

Gemäß Figur 5 erfolgt die Führung der Schaltstange 1 5 in eigenen Führungselementen 22. In diesem Fall sollten vorzugsweise Überströmkanäle 23 vorhanden sein, um überschüssige Hydraulikflüssigkeit 12 aus den Führungselementen 22 heraus drücken zu können. Alternativ kann aber auch, wie in Figur 4 gezeigt, die Führung direkt über den Kolben 20 erfolgen.

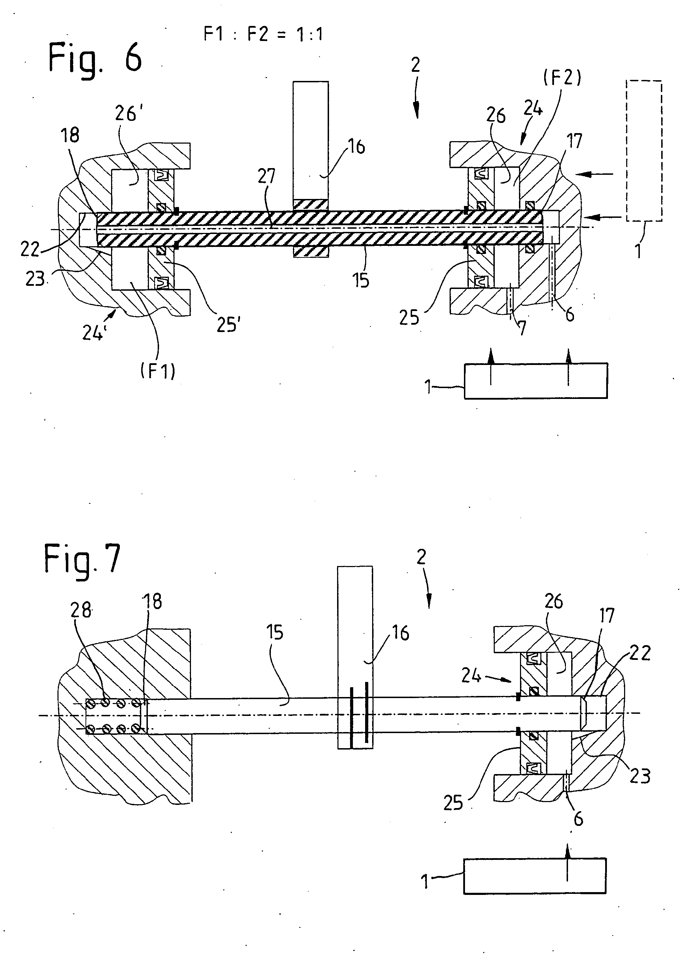

Die Figuren 6 bis 8 zeigen alternative Ausgestaltungen der Ansteuereinrichtung.

Gemäß Figur 6 ist zunächst die Aktuatoreinheit 2 als Kombination aus zwei einfach wirkenden Hydraulikzylindereinheiten 24, 24' ausgebildet. Jede der Hydraulikzylindereinheiten 24, 24' weist gemäß Figur 6 einen Kolben 25, 25' und einen Zylinderraum 26, 26' auf. Je eine der Hydraulikzylindereinheiten 24, 24' ist in der Nähe des Schaltstangenanfangs 17 bzw. des Schaltstangenendes 18 der betreffenden Schaltstange 15 angeordnet. Die in der Nähe des Schaltstangenanfangs 1 7 angeordnete Hydraulikzylindereinheit 24 wird dabei auf die gleiche Weise mit der Hydraulikflüssigkeit 12 beaufschlagt wie die doppelt wirkende Hydraulikzylindereinheit 2 der Figuren 3 bis 5.

Aber auch der Fluidkanal 6 zur in der Nähe des Schaltstangenendes 18 angeordneten Hydraulikzylindereinheit ist in der Nähe des Schaltstangenanfangs 17 angeordnet. Denn die Schaltstange 15 weist eine Bohrung 27, z. B. eine Zentralbohrung 27, auf. Mittels dieser Bohrung 27 ist es möglich, die Hydraulikflüssigkeit 12 zur Hydraulikzylindereinheit 24 hin bzw. von dieser weg zu führen, obwohl der korrespondierende Fluidkanal 6 in der Nähe des Schaltstangenanfangs 17 angeordnet ist. Über diese Bohrung 27 ist die in der Nähe des Schaltstangenendes 18 angeordnete Hydraulikzylindereinheit 24 also mit dem korrespondierenden Fluidkanal 6, 7 hydraulisch verbunden.

Bei der Ausführungsform gemäß Figur 6 ist es ohne Weiteres möglich, die wirksamen Flächen F1, F2 der Hydraulikzylindereinheiten 24, 24' gleich groß zu gestalten. Falls dies erfolgt, müssen beide Hydraulikzylindereinheiten 24, 24' aktiv angesteuert werden. Falls bei der Ausführungsform gemäß Figur 6 eine Ansteuerung nur einer der Hydraulikzylindereinheiten 24, 24' erfolgen soll, muss eine der beiden wirksamen Flächen F1, F2 größer gestaltet werden als die andere der Flächen F1, F2. Dies lässt sich beispielsweise dadurch erreichen, dass der Kolben 25, 25' einer der beiden Hydraulikzylindereinheiten 24, 24' einen größeren Kolbenaußendurchmesser aufweist als der Kolben 25, 25' der anderen Hydraulikzylindereinheit 24, 24'.

Aus Figur 6 ist ferner eine weitere Ausgestaltung ersichtlich, die prinzipiell sowohl bei der Ausführungsform gemäß Figur 6 als auch bei den Ausführungsformen gemäß den Figuren 2 bis 5 möglich ist. Gemäß Figur 6 ist es nämlich, wie gestrichelt eingezeichnet und auch in Verbindung mit Figur 1 bereits erwähnt, auch möglich, dass die Haupteinheit 1 gegenüber den Schaltstangenanfängen 17 axial versetzt angeordnet ist.

Gemäß Figur 7 ist die Aktuatoreinheit 2 als einfach wirkende Hydraulikzylindereinheit 24 ausgebildet, die einen Kolben 25 und einen Zylinderraum 26 aufweist. Mittels dieser Hydraulikzylindereinheit 24 ist die zugeordnete Schaltstange 15 nur unidirektional verschiebbar. In der Gegenrichtung ist die Schaltstange 1 5 aber mit einer Feder 28 kraftbeaufschlagt. Das Verschieben der Schaltstange 15 in die Gegenrichtung erfolgt also nicht hydraulisch, sondern mittels der Feder 28. Die Feder 28 und die Hydraulikzylindereinheit 24 sind also derart aufeinander abzustimmen, dass bei Beaufschlagen der Hydraulikzylindereinheit 24 mit druckbeaufschlagter Hydraulikflüssigkeit 12 die hydraulische Kraft überwiegt, anderenfalls die Federkraft. Bei geeigneter Auslegung kann dabei sogar erreicht werden, dass die wirksame Kraft in beide Verschieberichtungen etwa gleich groß ist.

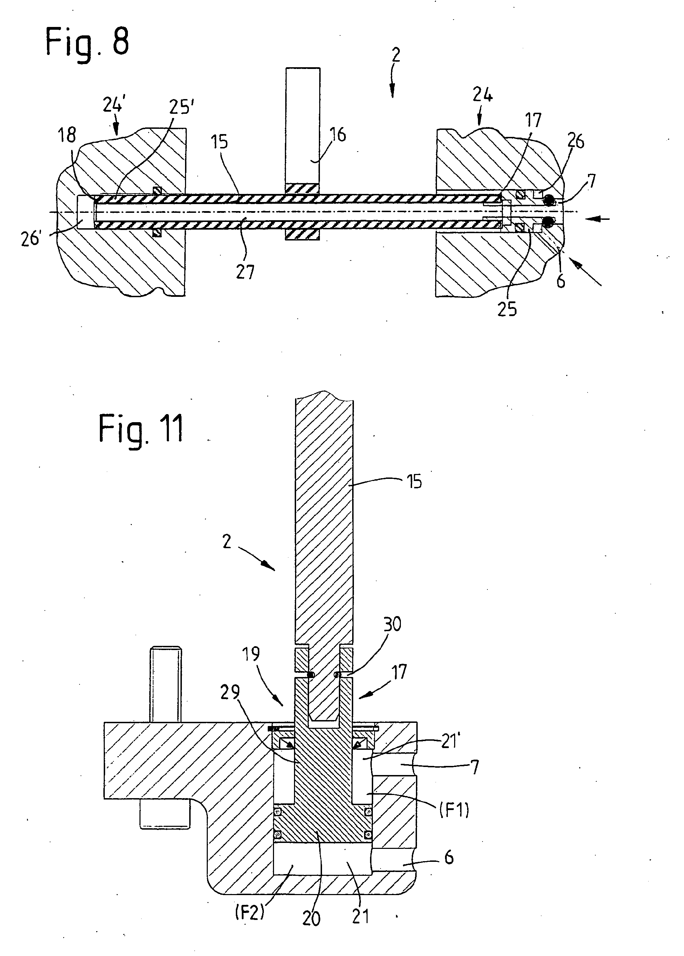

Die Ausführungsform gemäß Figur 8 ist eine Variante der Ausführungsform gemäß Figur 6. Der Unterschied zur Variante gemäß Figur 6 besteht darin, dass bezüglich der in der Nähe des Schaltstangenendes 18 angeordneten Hydraulikzylindereinheit 24' die Schaltstange 15 mit dem Kolben 25' identisch ist. Auch bei dieser Ausführungsform ist durch geeignete Ausgestaltung erreichbar, dass die wirksamen Flächen F1, F2 der Hydraulikzylindereinheiten 24, 24' gleich groß oder verschieden groß sind.

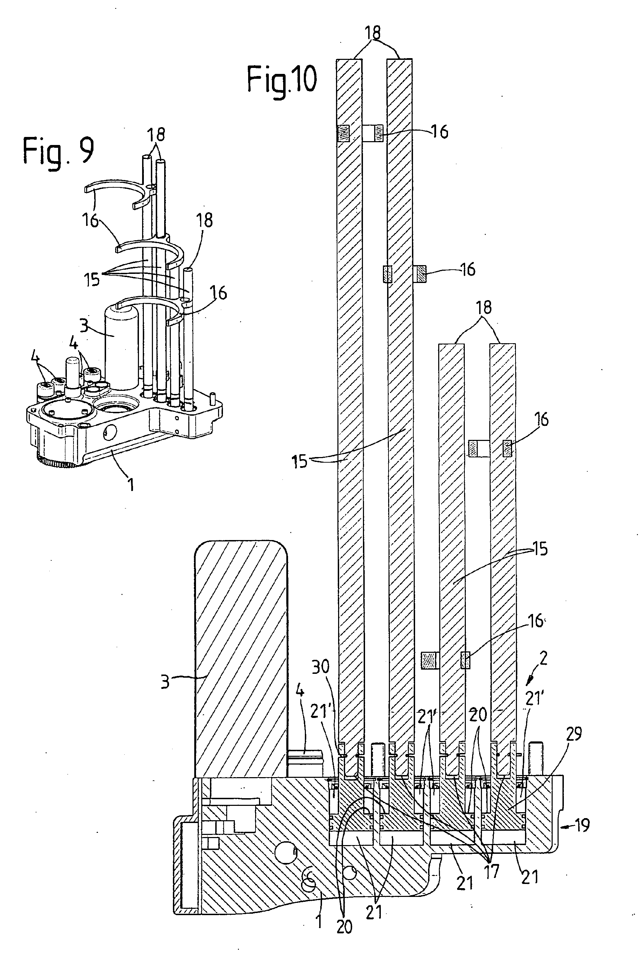

Die Figuren 9 bis 11 zeigen eine Modifikation der Ausführungsform der Figuren 2 bis 4. Gemäß den Figuren 9 bis 11 weisen die Kolben 20 der Hydraulikzylindereinheiten 19 Kolbenansätze 29 auf. Die Kolbenansätze 29 sind dabei von außerhalb der Aktuatoreinheiten 2 zugänglich. Die Schaltstangen 15 sind mit den Kolbenansätzen 29 der zugeordneten Hydraulikzylindereinheit 19 verbunden. Die Verbindung kann dabei, wie insbesondere aus Figur 11 ersichtlich ist, beispielsweise als Schnappverbindung mit einem Haltering 30 ausgebildet sein. Aber auch andere Verbindungen, z. B. Rastverbindungen, Schraubverbindungen, Keilverbindungen oder andere, sind möglich. Die Verbindung kann lösbar oder unlösbar sein. Gemäß Figur 11 ist sie lösbar, da der Haltering 30 entfernbar ist.

Mittels der erfindungsgemäßen hydraulischen Ansteuereinrichtung ist also auf einfache Weise ein kompakter Aufbau möglich, obwohl die Haupteinheit 1 in der Nähe der Schaltstangenanfänge 1 7 angeordnet ist.

### Bezugszeichenliste

- 1: Haupteinheit
- 2: Aktuatoreinheiten
- 3: Druckerzeugungseinrichtung
- 4: Schalteinrichtungen
- 5: Aktuatoreinheitsbaugruppe
- 6, 7: Fluidkanäle
- 8, 9, 10: Leitungen
- 11: Vorratstank
- 12: Hydraulikflüssigkeit
- 13, 14: Schaltventile
- 15: Schaltstangen
- 16: Schaltgabeln
- 17: Schaltstangenanfänge
- 18: Schaltstangenenden
- 19, 24, 24': Hydraulikzylindereinheiten
- 20, 25, 25': Kolben
- 21, 21', 26, 26': Zylinderräume
- 22: Führungen
- 23: Überströmkanäle
- 27: Bohrung
- 28: Feder
- 29: Kolbenansätze
- 30: Halteringe
- A bis D: Pfeile
- L: Linien
- F1, F2: Flächen
- S: Steuersignale

## Patentansprüche

1. Hydraulische Ansteuereinrichtung für ein Getriebe, insbesondere ein Stirnradgetriebe, mit einer Haupteinheit (1) und hydraulischen Aktuatoreinheiten (2),
- wobei in der Haupteinheit (1) eine Druckerzeugungseinrichtung (3) zur Druckbeaufschlagung von Hydraulikflüssigkeit (12) und Schalteinrichtungen (4) zum Durchschalten der Hydraulikflüssigkeit (12) von der Druckerzeugungseinrichtung (3) zu den Aktuatoreinheiten (2) und von den Aktuatoreinheiten (2) zu einem Vorratstank (11) angeordnet sind,
- wobei die Aktuatoreinheiten (2) mit der Haupteinheit (1) zu einer in sich starren Baueinheit verbunden sind,
- wobei die Aktuatoreinheiten (2) über in die Baueinheit eingebrachte starre Fluidkanäle (6) zumindest mit den Schalteinrichtungen (4) hydraulisch verbunden sind und die Schalteinrichtungen (4) über Leitungen (8) mit der Druckerzeugungseinrichtung (3) hydraulisch verbunden und mit dem Vorratstank (11) hydraulisch verbindbar sind,
- wobei jeder der Aktuatoreinheiten (2) eine Schaltstange (15) und eine der Schalteinrichtungen (4) zugeordnet sind,
- wobei von jeder Aktuatoreinheit (2) die ihr zugeordnete Schaltstange (15) durch entsprechendes Ansteuern der ihr zugeordneten Schalteinrichtung (4) axial bidirektional verschiebbar ist und das Verschieben der Schaltstangen (15) ein Schalten des Getriebes bewirkt,
- wobei die Schaltstangen (15) sich axial von Schaltstangenanfängen (17) zu Schaltstangenenden (18) erstrecken und zumindest die Schaltstangenanfänge (17) im wesentlichen auf gleicher axialer Höhe liegen,
**dadurch gekennzeichnet,**
- **dass** die Haupteinheit (1) axial in der Nähe der Schaltstangenanfänge (17) angeordnet ist und
- **dass** die Fluidkanäle (6, 7) zu den Aktuatoreinheiten (2) axial ausschließlich in der Nähe der Schaltstangenanfänge (17) verlaufen.

2. Ansteuereinrichtung nach Anspruch 1,
**dadurch gekennzeichnet,**
**dass** mindestens eine der Aktuatoreinheiten (2) als doppelt wirkende Hydraulikzylindereinheit (19) mit einem Kolben (20) und zwei Zylinderräumen (21, 21') ausgebildet ist, dass der Kolben (20) zwischen den Zylinderräumen (21, 21') angeordnet ist und dass die Hydraulikzylindereinheit (19) axial in der Nähe des Schaltstangenanfangs (17) der betreffenden Schaltstange (15) angeordnet ist.

3. Ansteuereinrichtung nach Anspruch 1 oder 2,
**dadurch gekennzeichnet,**
**dass** mindestens eine der Aktuatoreinheiten (2) als Kombination von zwei einfach wirkenden Hydraulikzylindereinheiten (24, 24') mit je einem Kolben (25, 25') und einem Zylinderraum (26, 26') ausgebildet ist, dass je eine der Hydraulikzylindereinheiten (24, 24') in der Nähe des Schaltstangenanfangs (17) und des Schaltstangenendes (18) der betreffenden Schaltstange (15) angeordnet ist und dass der Zylinderraum (26') der in der Nähe des Schaltstangenendes (18) angeordneten Hydraulikzylindereinheit (24') über eine in der betreffenden Schaltstange (15) angeordnete Bohrung (27) mit einem der Fluidkanäle (6, 7) verbunden ist.

4. Ansteuereinrichtung nach Anspruch 2 oder 3,
**dadurch gekennzeichnet,**
**dass** die Zylinderräume (21, 21', 26, 26') mindestens einer der Hydraulikzylindereinheiten (19, 24, 24') gleich große wirksame Flächen (F1, F2) aufweisen.

5. Ansteuereinrichtung nach Anspruch 2, 3 oder 4,
**dadurch gekennzeichnet,**
**dass** die Zylinderräume (21, 21', 26, 26') mindestens einer der Hydraulikzylindereinheiten (19, 24, 24') unterschiedliche große wirksame Flächen (F1, F2) aufweisen, insbesondere dass die wirksame Fläche (F2) des einen Zylinderraums (21, 26) doppelt so groß wie die wirksame Fläche (F1) des anderen Zylinderraums (21', 26') ist.

6. Ansteuereinrichtung nach einem der obigen Ansprüche,
**dadurch gekennzeichnet,**
**dass** mindestens eine der Aktuatoreinheiten (2) als einfach wirkende Hydraulikzylindereinheit (24) mit einem Kolben (25) und einem Zylinderraum (26) ausgebildet ist, dass die zugeordnete Schaltstange (15) mittels der Hydraulikzylindereinheit (24) unidirektional verschiebbar ist und dass die Schaltstange (15) in der Gegenrichtung mit einer Feder (28) kraftbeaufschlagt ist.

7. Ansteuereinrichtung nach einem der Ansprüche 2 bis 6,
**dadurch gekennzeichnet,**
**dass** die Schaltstange (15) mindestens einer der Aktuatoreinheiten (2) mit mindestens einem der Kolben (20, 25, 25') der Hydraulikzylindereinheiten (19, 24, 24') der ihr zugeordneten Aktuatoreinheit (2) identisch ist.

8. Ansteuereinrichtung nach einem der Ansprüche 2 bis 7,
**dadurch gekennzeichnet,**
**dass** die Schaltstange (15) mindestens einer der Aktuatoreinheiten (2) mit mindestens einem der Kolben (20, 25, 25') der Hydraulikzylindereinheiten (19, 24, 24') der ihr zugeordneten Aktuatoreinheit (2) unmittelbar verbunden ist.

9. Ansteuereinrichtung nach einem der Ansprüche 2 bis 8,
**dadurch gekennzeichnet,**
**dass** mindestens einer der Kolben (20, 25) mindestens einer der Hydraulikzylindereinheiten (19, 24, 24') einen von außerhalb der Hydraulikzylindereinheit (19, 24, 24') zugänglichen Kolbenansatz (29) aufweist und dass die dieser Hydraulikzylindereinheit (19, 24, 24') zugeordnete Schaltstange (15) mit dem Kolbenansatz (29) verbunden ist.

10. Ansteuereinrichtung nach Anspruch 9,
**dadurch gekennzeichnet,**
**dass** die Schaltstange (15) mit dem Kolbenansatz (29) lösbar verbunden ist.

11. Ansteuereinrichtung nach einem der obigen Ansprüche,
**dadurch gekennzeichnet,**
**dass** mindestens eine der Aktuatoreinheiten (2) einzeln mit der Haupteinheit (1) verbunden ist.

12. Ansteuereinrichtung nach einem der obigen Ansprüche,
**dadurch gekennzeichnet,**
**dass** mehrere der Aktuatoreinheiten (2), insbesondere alle Aktuatoreinheiten (2), in einer gemeinsamen Aktuatoreinheitsbaugruppe (5) angeordnet sind und dass die Aktuatoreinheitsbaugruppe (5) mit der Haupteinheit (1) verbunden ist.

13. Ansteuereinrichtung nach einem der obigen Ansprüche,
**dadurch gekennzeichnet,**
**dass** mindestens eine der Aktuatoreinheiten (2) in die Haupteinheit (1) integriert ist.

14. Ansteuereinrichtung nach einem der obigen Ansprüche,
**dadurch gekennzeichnet,**
**dass** die Haupteinheit (1) gegenüber den Schaltstangenanfängen (17) radial versetzt angeordnet ist.

15. Ansteuereinrichtung nach einem der obigen Ansprüche,
**dadurch gekennzeichnet,**
**dass** die Haupteinheit (1) gegenüber den Schaltstangenanfängen (15) axial versetzt angeordnet ist.
